# EUROPEAN PATENT SPECIFICATION

(11) **EP 1 865 285 B1**
(45) Date of publication and mention of the grant of the patent: **25.02.2015**
(21) Application number: 06728893.6
(22) Date of filing: 10.03.2006
(51) Int. Cl.: G01C 21/00, G08G 1/0969, G09B 29/00, G09B 29/10, G01C 21/32, G01C 21/30, G01C 21/36

(54) **NAVIGATION DEVICE, NAVIGATION METHOD, NAVIGATION PROGRAM, AND COMPUTER-READABLE RECORDING MEDIUM**
NAVIGATIONSEINRICHTUNG, NAVIGATIONSVERFAHREN, NAVIGATIONSPROGRAMM UND COMPUTERLESBARES AUFZEICHNUNGSMEDIUM
DISPOSITIF, PROCEDE ET PROGRAMME DE NAVIGATION ET SUPPORT D'ENREGISTREMENT LISIBLE PAR ORDINATEUR

(30) Priority: 16.03.2005 JP 2005076149
(43) Date of publication of application: 12.12.2007
(73) Proprietor: Pioneer Corporation, Kanagawa 212-0031 (JP)
(72) Inventor: GOTO, Seiji, Yamada, Kawagoe-shi, Saitama (JP)
(74) Representative: Haley, Stephen
(86) International application number: PCT/JP2006/304725
(87) International publication number: WO 2006/098236

(56) References cited:
- JP-A- 05 240 653
- JP-A- 11 132 784
- JP-A- 11 248 479
- JP-A- 2001 336 944
- JP-A- 2003 065 781
- JP-A- 2004 132 922

## Description

### TECHNICAL FIELD

The present invention relates to a navigation device, a navigation method, a navigation program, and a computer-readable recording medium that display routes on which a vehicle travels. However, application of the present invention is not limited to the navigation device, navigation method, the navigation program, and the computer-readable recording medium above.

### BACKGROUND ART

Conventionally, even when a vehicle travels on a road that has a complicated configuration including elliptic or circular roads such as roundabouts, and polygonal roads, pattern matching and map matching by perpendicular drawing to an adjacent road and the like have been performed in a similar manner as in the case of other roads. However, on such roads, vehicles do not necessarily travel as road data indicates. Even a road having wide width is expressed with a signal line by road data. Since actual roads have a physical width, vehicles can freely travel along the road within the width of the road.

There are two methods to prevent improper map matching. One is to stop a display correction process of a vehicle position mark by map matching when the vehicle enters a complicated intersection area (for example, Patent Document 1). The other one is to forcibly stop map matching when it is detected that a vehicle has entered a roundabout (for example, Patent Document 2).

Patent Document 1: Japanese Patent Application Laid-Open Publication No. 2004-132922
Patent Document 2: Japanese Patent Application Laid-Open Publication No. 2003-65781

### DISCLOSURE OF INVENTION

### PROBLEM TO BE SOLVED BY THE INVENTION

However, if the conventional map matching process is performed in the case of a road having a wide width, when a vehicle drives in an area that is not planned by the navigation device, the vehicle can be matched to another road without it being recognized that the vehicle is traveling on the road. In this case, a problem may arise in that the vehicle position on a navigation screen differs from the actual position and the vehicle may be guided to an incorrect position. Another problem that may arise is unnecessary rerouting.

### MEANS FOR SOLVING PROBLEM

In a first aspect, the invention consists in a navigation device for a vehicle, comprising:
a position detecting unit that detects a current position of the vehicle;
a display unit for displaying the position of the vehicle on a map which includes roads, representing road data, upon which the vehicle travels; and
an identifying unit that identifies a road of a predetermined type in the road data;
characterised by an acquiring unit that acquires a reference point with respect to the identified road, the location of the reference point, relative to the identified road, being predetermined based upon the road type of the identified road; and
a correcting unit that corrects the current position of the vehicle detected by the position detecting unit by projecting the current map position of the vehicle, from the reference point to an intersection point with the identified road on the map, to obtain a corrected position of the vehicle for display on the map of the display unit.

In a second aspect, the invention consists in a navigation method for a vehicle, comprising:
detecting a current position of the vehicle;
displaying the position of the vehicle on a map which includes roads, representing road data, upon which the vehicle travels;
identifying a road of a predetermined type in the road data;
acquiring a reference point with respect to the identified road, the location of the reference point, relative to the identified road, being predetermined based upon the road type of the identified road;
correcting the current position of the vehicle by projecting the current map position of the vehicle, from the reference point to an intersection point with the identified road on the map, to obtain a corrected position of the vehicle for display on the map.

In a third aspect, the invention consists in a navigation program that causes a computer to execute the navigation method according to the second aspect.

In a fourth aspect, the invention consists in a computer-readable recording medium that stores therein the navigation program according to the third aspect.

### BRIEF DESCRIPTION OF DRAWINGS

Fig. 1 is a block diagram of a functional configuration of a navigation device according to an embodiment of the present invention;
Fig. 2 is a flowchart showing a process of the navigation method according to the embodiment of the present invention;
Fig. 3 is a block diagram showing one example of a functional configuration of a navigation device according to an example of the present invention;
Fig. 4 is a diagram for explaining a map matching process through a virtual central point;
Fig. 5 is an explanatory diagram for explaining map matching in a circular roundabout;
Fig. 6 is a diagram for explaining the map matching in a rectangular roundabout;
Fig. 7 is an explanatory diagram for explaining a process in the case of a U-turn road;
Fig. 8 is an explanatory diagram for explaining calculation of the position of a virtual central point; and
Fig. 9 is a flowchart of the map matching according to this example.

### EXPLANATIONS OF LETTERS OR NUMERALS

- 101: Identifying unit
- 102: Acquiring unit
- 103: Position detecting unit
- 104: Correcting unit
- 105: Display unit
- 300: Navigation control unit
- 301: Operation unit
- 302: Display unit
- 303: GPS receiver
- 304: Travel speed sensor
- 305: Angular speed sensor
- 306: Inclination sensor
- 307: Acceleration sensor
- 308: Point searching unit
- 309: Route searching unit
- 310: Route guiding unit

### BEST MODE(S) FOR CARRYING OUT THE INVENTION

Exemplary embodiments of a navigation device, a navigation method, a navigation program, and a computer-readable recording medium according to the present invention are explained in detail below with reference to the accompanying drawings.

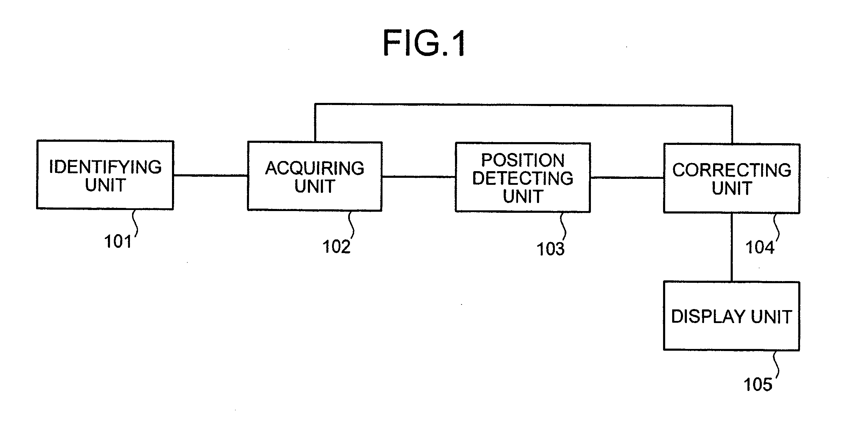

Fig. 1 is a block diagram of a functional configuration of a navigation device according to an embodiment of the present invention. The navigation device according to the present embodiment includes an identifying unit 101, an acquiring unit 102, a position detecting unit 103, a correcting unit 104, and a display unit 105.

The identifying unit 101 identifies a reference road that is to be a reference of a road on which a vehicle travels. The identifying unit 101 can be configured to determine whether a round intersection is present and to identify the round intersection as the reference road when it is determined that a round intersection is present ahead of the vehicle. A round intersection is an intersection having a road that has free traveling width ahead of the vehicle and that goes around a central point as an axis.

Moreover, the identifying unit 101 can be configured to analyze the shape of a road ahead of the vehicle, and when the road has a predetermined shape, to determine the road as the round intersection. Furthermore, the identifying unit 101 can be configured to shift a searching point for a predetermined distance or for a predetermined number of blocks on a road on which the vehicle can travel, and to determine that a round intersection is present ahead of the vehicle when the searching point comes back to the original point within the predetermined distance or the predetermined number of blocks.

The acquiring unit 102 acquires a reference point with respect to the reference road identified by the identifying unit 101. For example, the acquiring unit 102 can acquire a shape of the reference road and can acquire a center of a geometric figure that is identified by the shape of the reference road as the reference point. Alternatively, the reference point with respect to the reference road can be acquired by reading reference point information concerning reference road data. For example, a virtual central point can be acquired by reading road discrimination information that is stored together with road data. Alternatively, the virtual central point can be acquired by reading the information concerning a virtual central point that is stored in the road data.

The position detecting unit 103 detects a current position of the vehicle. The correcting unit 104 acquires a corrected position that is obtained by correcting the current position detected by the position detecting unit 103 using the reference point acquired by the acquiring unit 102, on the reference road. The display unit 105 displays both the corrected position and the reference road.

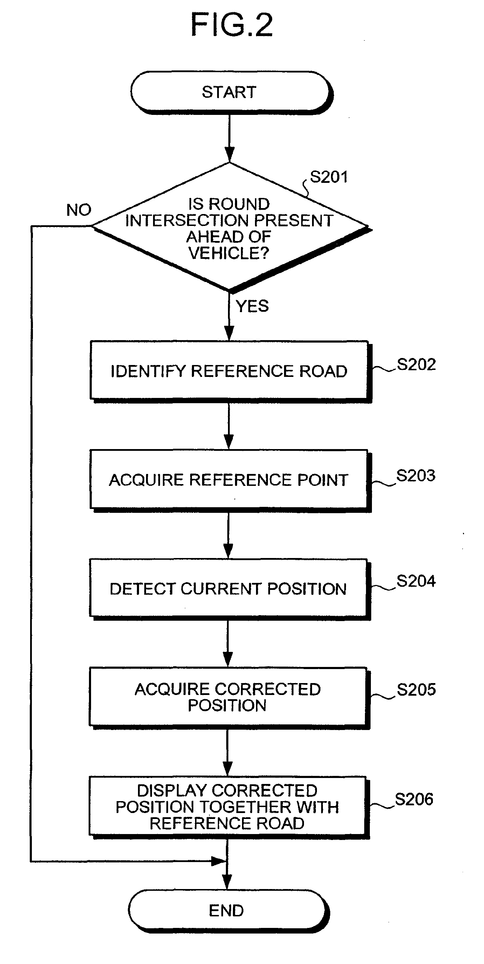

Fig. 2 is a flowchart showing a process of the navigation method according to the embodiment of the present invention. First, the identifying unit 101 determines whether a round intersection is present ahead of a vehicle (step S201). When it is determined that a round intersection is present ahead of the vehicle (step S201: YES), the identifying unit 101 identifies this round intersection as a reference road that is to be a reference of a road on which the vehicle travels (step S202). When it is determined that a round intersection is not present (step S201: NO), a series of the process is ended.

Next, the acquiring unit 102 acquires a reference point with respect to the reference road identified by the identifying unit 101 (step S203). For example, the acquiring unit 102 acquires a shape of the reference road, and acquires a center of a geometric figure identified by the shape of the reference road as the reference point. Alternatively, the reference point can be acquired by reading reference point information concerning data of the reference road.

Next, the position detecting unit 103 detects a current position of the vehicle (step S204). The correcting unit 104 then acquires a corrected position that is obtained by correcting the current position detected by the position detecting unit 103 using the reference point acquired by the acquiring unit 102, on the reference road (step S205). Next, the display unit 105 displays the corrected position together with the reference road (step S206).

According to the embodiment described above, it is possible to prevent the current position of the vehicle from being displayed at a position outside the reference road, which makes the traveling position unclear. Therefore, the position of the vehicle can be shown at a natural position when viewed by a driver.

### Example

### (Functional Configuration)

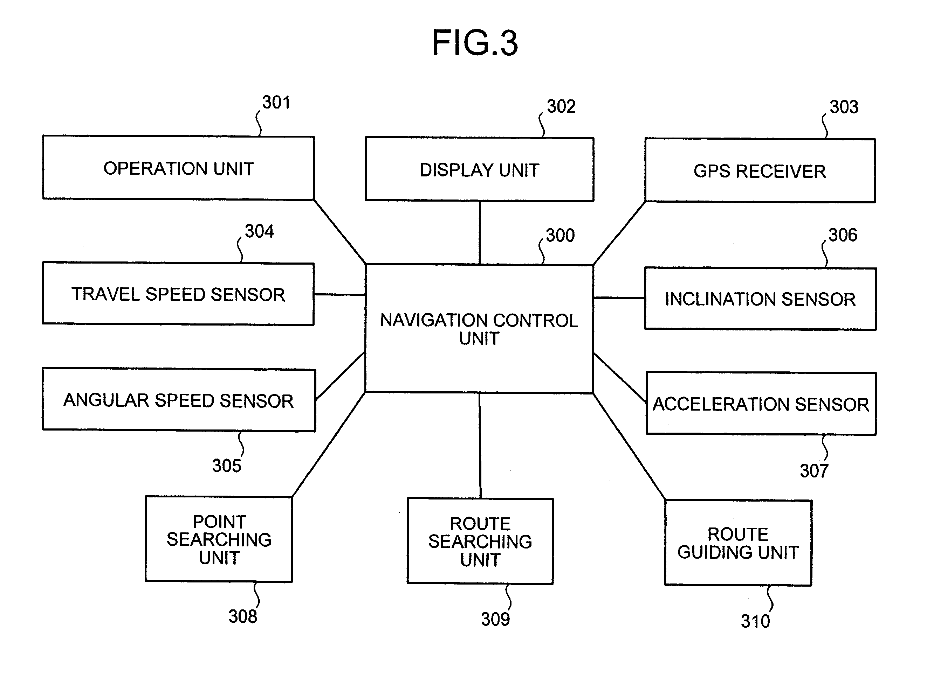

Fig. 3 is a block diagram showing one example of a functional configuration of a navigation device according to an example of the present invention. The navigation device includes a navigation control unit 300, an operation unit 301, a display unit 302, a GPS receiver 303, a travel speed sensor 304, an angular speed sensor 305, an inclination sensor 306, an acceleration sensor 307, a point searching unit 308, a route searching unit 309, and a route guiding unit 310.

The navigation control unit 300, the GPS receiver 303, the point searching unit 308, the route searching unit 309, and the route guiding unit 310 can be implemented by, for example, a microcomputer or the like that is constituted of a CPU (central processing unit) that executes predetermined arithmetic operations, a ROM (read only memory) that stores various kinds of control programs, a RAM (random access memory) that functions as a work area of the CPU, and the like.

The navigation control unit 300 controls the entire navigation device. The operation unit 301 includes an operation button, a remote control, a touch panel, and the like. The display unit 302 includes a liquid crystal display, an organic EL display, and the like. The display unit 105 is implemented by the display unit 302.

The GPS receiver 303 receives a radio wave from GPS satellites to obtain vehicle position information. The vehicle position information is obtained by receiving a radio wave from the GPS satellites and by acquiring a geometric position relative to the GPS satellites, and can be measured anywhere on the earth. As the radio wave, an L1 wave is used that is a carrier wave of 1.57542 MHz and on which a C/A (coarse and access) code and a navigation message are carried. With this wave, the current position (latitude and longitude) of the vehicle is detected. Information collected by various sensors such as the travel speed sensor 304 and the angular speed sensor 305 described later can be further taken into consideration.

The navigation control unit 300 outputs information indicating a traveling position on a map to the display unit 302 based on the vehicle position information obtained by the GPS receiver 303 and map DB information that is stored in advance.

The travel speed sensor 304 detects a traveling speed of a device main unit. If the device main unit is a vehicle, it is detected from the output-side of a transmission shaft. The angular speed sensor 305 detects the angular speed of the vehicle at turning, and outputs angular speed data, relative bearing data, and data indicating the amount of orientation change. The inclination sensor 306 detects the incline angle of a road surface, and outputs incline angle data.

The acceleration sensor 307 detects acceleration. Output of the acceleration sensor 307 is 0 V to 5 V, and the output at the time of no acceleration is 2.5 V. The output of the acceleration sensor 307 increases as 2.6 V, 2.7 V, ... as the vehicle accelerates, and conversely, decreases as 2.4 V, 2.3 V, ... as the vehicle decelerates.

The point searching unit 308 searches for an arbitrary point based on information input from the operation unit 301, and outputs the point to the display unit 302. Moreover, the route searching unit 309 calculates the optimal route to the point based on point information obtained by the point searching unit 308.

The route guiding unit 310 generates real-time route guidance information based on the information obtained by the route searching unit 309 and the vehicle position information. Functions of the identifying unit 101, the acquiring unit 102, the position detecting unit 103, and the correcting unit 104 are implemented by the route guiding unit 310.

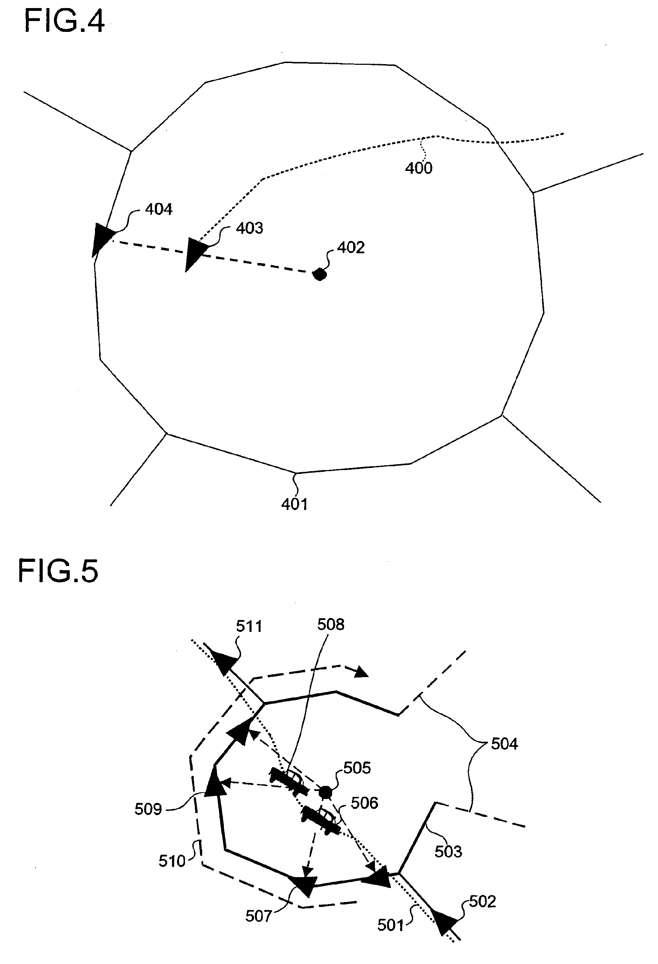

Fig. 4 is a diagram for explaining a map matching process through a virtual central point. In navigation devices that display a driving route for a vehicle, the shape of a road itself is not displayed precisely but often expressed symbolically with, for example, curved lines. However, when the route actually traveled is displayed with this symbolically expressed road, a gap between the traveled route and road can result since the symbolically expressed road does not express the actual road as it is, i.e., having width.

For example, a vehicle is traveling along a traveling route 400. On the other hand, the route displayed on the display unit 302 is a virtual-central-point symmetrical road 401. If the actual traveling route 400 and the virtual-central-point symmetrical road 401 are displayed as they are, such a problem can arise that it is difficult for a driver to understand where the vehicle is driving. Therefore, it is necessary to correct the traveling route 400 on the virtual-central-point symmetrical road 401 to be displayed. By correcting the display, it becomes possible for the driver to easily understand the route on which the vehicle is currently traveling. This correction of the position is explained.

First, when the virtual-central-point symmetrical road 401 is reached, the map matching process is started. Specifically, when the road on which the vehicle is currently traveling is found to have an elliptic shape or a polygonal shape such as a roundabout (traffic circle, rotary) ahead, or when vehicular position is to be displayed as if the vehicle is traveling in a place outside of the road by the conventional map matching process, the vehicle is determined to have reached the virtual-central-point symmetrical road 401.

Next, a virtual central point 402 of the place is calculated from road data of the virtual-central-point symmetrical road 401. Alternatively, the virtual central point 402 can be obtained from data that is prepared in advance, not by calculation. For example, the virtual central point 402 can be obtained by reading road discrimination information that is stored together with the road data. Alternatively, information on the virtual central point 402 is included in the road data, and by reading the information on the virtual central point 402, the virtual central point 402 can be obtained.

Since the actual vehicle traveling position is often positioned away from the road indicated by the road data, a line connecting the virtual central point and an actual vehicle traveling position 403 that is acquired by the GPS and sensors (gyro sensor, acceleration sensor) is extended, and the point at which the line intersects with the road is determined as a map matching position 404.

The map matching process includes such pattern matching and perpendicular drawing to an adjacent road. Such a map matching process is often applied not only to a roundabout of a circular road explained in Fig. 4 but also to all kinds of roads having wide width. More specifically, roads having wide width to which this example is applied include roads given below.

The first case is a road expressed in an elliptic shape (including a circular shape) or a polygonal shape (roundabout, rotary). In this case, a vehicle can travel in an oval orbit and can travel straight. The second case is a place such as an open space that is expressed as a rectangular road. In this case, the vehicle can travel freely. The third case is an intersection of wide roads. In this case, the vehicle travels inside the intersection in accordance with a variety of rules. The fourth case is a U-turn road. The vehicle does not travel along width of the road data.

Fig. 5 is an explanatory diagram for explaining map matching in a circular roundabout. The vehicle travels along a driving route 501, and is at a traveling position 502 before entering the roundabout. The vehicle then enters a virtual-central-point symmetrical road 503. The virtual-central-point symmetrical road 503 is linked to a virtual-central-point asymmetrical road 504.

A portion of the virtual-central-point symmetrical road 503 is detected to calculate a virtual central point 505 from the shape of the virtual-central-point symmetrical road 503. Alternatively, the virtual central point 505 can be obtained from data that is prepared in advance, not by calculating the virtual central point 505. For example, by reading road discrimination information stored together with the road data, the virtual central point 505 can be obtained. Alternatively, information on the virtual central point 505 is included in the road data, and by reading the information on the virtual central point 505, the virtual central point 505 can be obtained.

Subsequently, the vehicle travels to a traveling position 506. The virtual central point 505 and the traveling position 506 are connected by a line, and the point at which the virtual-central-point symmetrical road 503 intersects with an extension of the line is determined as a map matching position 507. This map matching position 507 is to be the current position displayed on the display unit 302. Similarly, when the vehicle reaches a traveling position 508, the virtual central point 505 and the traveling position 508 are connected by a line, and the point at which the virtual-central-point symmetrical road 503 intersects with an extension of the line is determined as a map matching position 509.

By thus performing the map matching, even though the vehicle is traveling on the traveling route 501, it is displayed as if the vehicle is traveling on a map matching route 510. After passing the virtual-central-point symmetrical road 503, the vehicle travels to a traveling position 511.

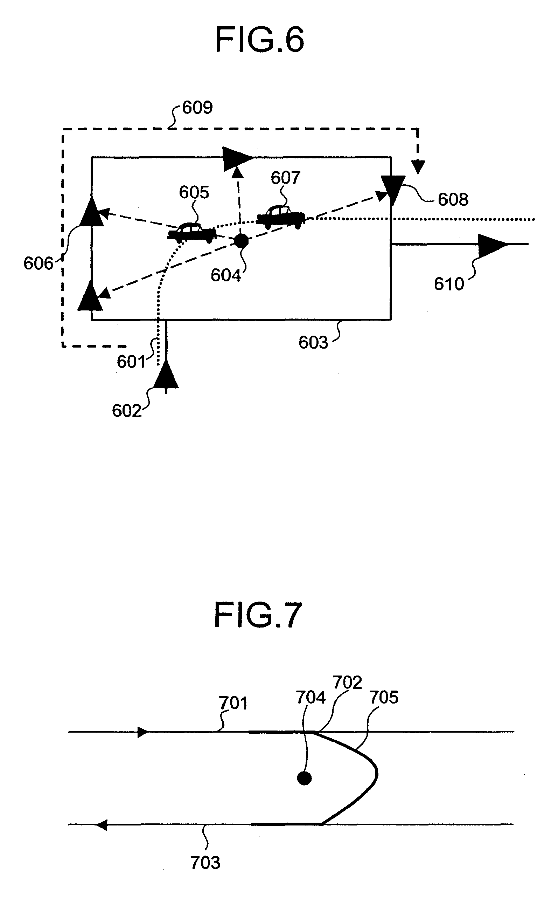

Fig. 6 is a diagram for explaining the map matching in a rectangular roundabout. The vehicle travels along a traveling route 601, and is at a traveling position 602 before entering the roundabout. The vehicle then enters a virtual-central-point symmetrical road 603. A virtual central point 604 is calculated from the shape of the virtual-central-point symmetrical road 603.

Subsequently, the vehicle travels to a traveling position 605. The virtual central point 604 and the traveling position 605 are connected by a line, and the point at which the virtual-central-point symmetrical road 603 intersects with an extension of the line is determined as a map matching position 606. Similarly, when the vehicle reaches a traveling position 607, the virtual central point 604 and the traveling position 607 are connected by a line, and the point at which the virtual-central-point symmetrical road 603 intersects with an extension of the line is determined as a map matching position 608.

By thus performing the map matching, even though the vehicle is traveling on the traveling route 601, it is displayed as if the vehicle is traveling on a map matching route 609. After passing the virtual-central-point symmetrical road 603, the vehicle travels to a traveling position 610.

Whether to perform the map matching process can be determined based on a road attribute that is stored in advance. In this case, attribute data is included in the road data, and based on the attribute data, whether to perform the map matching process is determined. The attribute data includes data corresponding to a road expressed with an elliptic shape (including a circular shape) and a polygonal shape (roundabout, rotary), a place such as an open space, an intersection of wide roads, and a U-turn road.

Software checks and classifies the attribute data into a subject of the conventional map matching and a subject of the process of the present invention. The virtual central point can be calculated from the shape of a road, or can also be included in road data in advance. For example, by reading road discrimination information stored together with the road data, the virtual central point can be obtained. Alternatively, information on the virtual central point can be included in the road data, and by reading the information on the virtual central point, the virtual central point can be obtained.

Whether to perform the map matching process can also be determined based on the shape of a road in a traveling direction. A road that is determined as a road expressed in an elliptic shape (including a circular shape) or a polygonal shape by a shape recognition process can be determined as a subject of the map matching. Alternatively, road width or a road type (national road, express way, etc.) are stored in advance, and based on this stored data, an intersection at which roads cross can be determined as a subject of the map matching.

The shape recognition process is explained. First, a road in a traveling direction is searched for a predetermined distance (or a predetermined amount of data). When a searched route returns to the same place, it is determined as an elliptic shape or a polygonal shape. The actual shape is not necessarily completely closed, and a part thereof can be open. On the other hand, when the searching route returns in the same direction, it is determined as a U-turn road.

Fig. 7 is an explanatory diagram for explaining a process in the case of a U-turn road. First, the vehicle travels along a route 701. A U-turn is made at a point 702. Since the vehicle travels along a route 703 after making the U-turn, based on a condition that it is present between the route 701 and the route 703, and near the point 702, a virtual central point 704 is acquired. Based on the virtual central point 704, the position of the vehicle making a U-turn is displayed along a virtual-central-point symmetrical road 705.

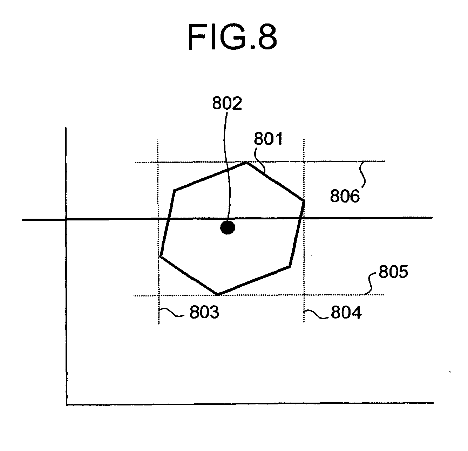

Fig. 8 is an explanatory diagram for explaining calculation of the position of a virtual central point. A virtual central point 802 is calculated from a subject road 801 using the map matching process. First, a minimum value 803 of an X coordinate, a maximum value 804 of the X coordinate, a minimum value 805 of a Y coordinate, and a maximum value 806 of the Y coordinate of the subject road 801 are acquired.

Next, a central-point X coordinate and a central-point Y coordinate are calculated from two expressions, (1) central-point X coordinate=(maximum value of the X coordinate+minimum value of the X coordinate)÷2, and (2) central-point Y coordinate=(maximum value of the Y coordinate+minimum value of the Y coordinate)÷2. The virtual central point 802 is determined by the central-point X coordinate and the central-point Y coordinate. The position of the virtual central point 802 can be acquired by substituting the data.

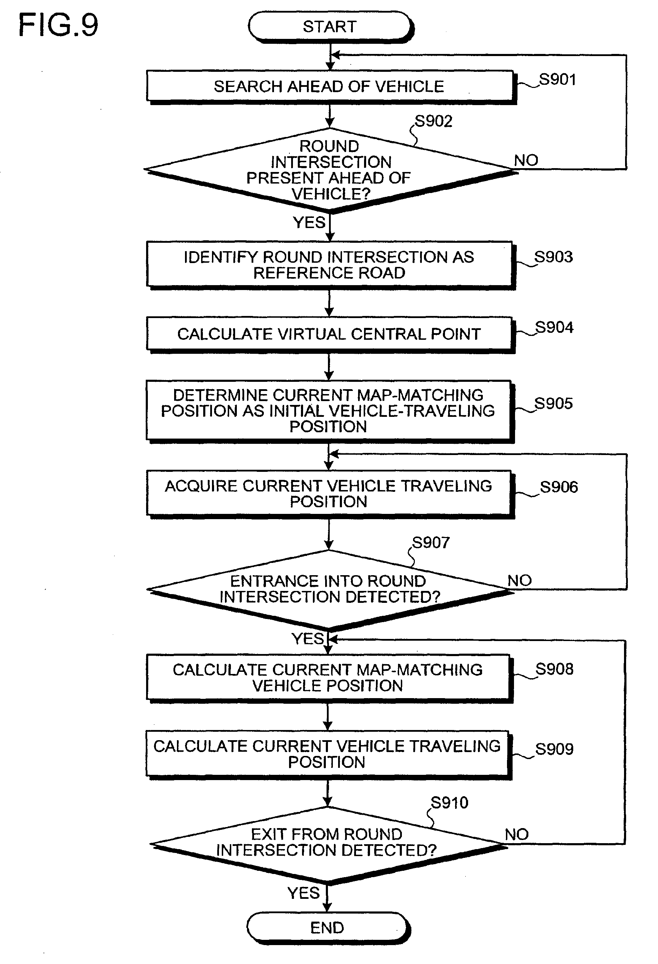

Fig. 9 is a flowchart of the map matching according to this example. The vehicle is traveling, and the map matching is performed on a traveling route on road data prepared in advance, and a current map matching position is displayed on the display unit 302. First, a road ahead of the vehicle is searched (step S901).

Next, it is determined whether a round intersection is present ahead of the vehicle (step 5902). Specifically, a road ahead in a traveling direction, for example, a point 50 m ahead of a vehicle traveling position, is searched, and it is determined whether a round intersection such as a road in an elliptic shape or a polygonal shape is detected at the searched point. For example, by the shape recognition process, it is detected whether the road is in a circular shape or an elliptic shape, or is a traffic circle or a rotary, and the like, and based on the detection, whether it is a round intersection is determined. The round intersection is a road that has a free traveling width and that goes around a central point as an axis. Alternatively, road data that is stored in advance can be configured to have attribute data including data that indicates whether it is a round intersection, and by checking this attribute data, whether it is a round intersection can be determined.

When a round intersection is not present ahead of the vehicle (step S902: NO), the process returns to step S901. When a round intersection is present ahead of the vehicle (step S902: YES), the round intersection is identified as a reference road (step S903). In other words, this round intersection is identified as a subject of the map matching.

Next, a virtual central point is calculated (step S904). Specifically, the virtual central point of the round intersection that is identified as the reference road is acquired. The virtual central point can be obtained from data that is prepared in advance, not by calculating the virtual central point. For example, by reading road discrimination information that is stored together with the road data, the virtual central point can be obtained. Alternatively, information on the virtual central point can be included in the road data, and by reading the information on the virtual central point, the virtual central point can be acquired.

Subsequently, a current map matching position is set to a vehicle-traveling initial position (step S905). As for the initial vehicle-traveling position, a point at which the vehicle enters can be determined as the initial vehicle-traveling position. Moreover, the initial vehicle-traveling position can be determined after it is confirmed that a difference between a direction of a road and a direction of a vehicle traveling position at a point at which the vehicle crosses the road is within a certain value. In other words, the initial vehicle-traveling position can be determined after it is confirmed that the vehicle is traveling along the direction of the road at the crossed point. This enables to enhance reliability of the vehicle traveling position.

Next, a current vehicle traveling position is calculated (step S906). Specifically, the current vehicle traveling position is calculated by adding a travel distance and an amount of orientation change that are obtained by the travel speed sensor 304 and the angular speed sensor 305 to the vehicle-traveling initial position. The vehicle traveling position can be calculated using position information obtained by the GPS receiver 303. Moreover, setting a position at which a circular or a polygonal road is found in the traveling direction of the vehicle as a starting point, the vehicle traveling position can be calculated using the traveling position that is detected by the travel speed sensor 304 and the angular speed sensor 305.

Next, it is determined whether entrance into the round intersection is detected (step S907). When the vehicle does not enter the round intersection (step S907: NO), the process returns to step S906. When the vehicle enters the round intersection (step S907: YES), a current map-matching vehicle position is calculated (step S908). Specifically, a line connecting the virtual central point and the current vehicle traveling position is extended, and a point at which the extended line intersects with the round intersection is determined as the map-matching vehicle position.

Although the extended line intersects with the elliptic or the polygonal road at two points, it is possible to determine which of the points from the traveling direction of the vehicle if one-way traffic information is added to the road data. If the one-way traffic information is not added, a point closer to the actual vehicle traveling position is determined as a map-matching vehicle position.

Subsequently, a current vehicle traveling position is calculated (step S909). Specifically, the current vehicle traveling position is calculated by adding a travel distance and an amount of orientation change that are obtained by the travel speed sensor 304 and the angular speed sensor 305 to the vehicle-traveling initial position. It is then determined whether the vehicle has exited from the round intersection (step S910). When the vehicle has not exited from the round intersection (step S910: NO), the process returns to step S908. When the vehicle enters the round intersection (step S910: YES), a series of the process is ended.

According to the example described above, it is possible to prevent such a display that a vehicle is traveling in place outside of a road, or matching to a wrong road, and is possible to accurately display the vehicle position at a natural position when viewed by a driver. In addition, improper guidance or unnecessary rerouting can be avoided. Particularly in an elliptic or a polygonal road that is difficult for a driver to drive, a route can be appropriately guided.

The navigation method described in the present embodiment can be implemented by a computer such as a personal computer and a workstation executing a program that is prepared in advance. This program is recorded on a computer-readable recording medium such as a CD-ROM, an MO, and a DVD, and is executed by being read from the recording medium by a computer. This program can be a transmission medium that can be distributed through a network such as the Internet.

## Claims

1. A navigation device for a vehicle, comprising:
a position detecting unit (103) configured to detect a current position of the vehicle;
a display unit (105) configured to display the position of the vehicle on a map which includes roads, representing road data, upon which the vehicle travels; and
an identifying unit (101) configured to identify a road (401) of a predetermined type in the road data;
**characterised by** an acquiring unit (102) configured to acquire a reference point (402) with respect to the identified road, the location of the reference point, relative to the identified road, being predetermined based upon the road type of the identified road; and
a correcting unit (104) configured to correct the current position of the vehicle detected by the position detecting unit by projecting the current map position of the vehicle, from the reference point to an intersection point with the identified road on the map, to obtain a corrected position (404) of the vehicle for display on the map of the display unit.

2. The navigation device according to claim 1, wherein the identifying unit (101) is configured to determine whether a road of a round intersection type that has a free traveling width and that goes around a central point as an axis is present ahead of the vehicle, and to identify, when it is determined that the round intersection is present, the round intersection as the identified road (401).

3. The navigation device according to claim 2, wherein the identifying unit (101) is configured to analyze a shape of a road ahead of the vehicle, and to determine the round intersection type of road to be present when the road ahead of the vehicle is in a predetermined shape.

4. The navigation device according to claim 3, wherein the identifying unit (101) is configured to shift a searching position for a predetermined distance or predetermined number of blocks on a road on which the vehicle can travel, and determine that the round intersection type of road is present ahead of the vehicle when the searching position returns to an original position within the predetermined distance or number of blocks.

5. The navigation device according to claim 1, wherein the acquiring unit (102) is configured to acquire a shape of the identified road (401), and to acquire a center of a geometric figure identified by the shape of the identified road as the reference point (402).

6. The navigation device according to claim 1, wherein the acquiring unit (102) is configured to acquire the reference point (402) with respect to the identified road (401) by reading reference point information concerning data of the identified road.

7. A navigation method for a vehicle, comprising:
detecting (S204) a current position of the vehicle;
displaying (S206) the position of the vehicle on a map which includes roads, representing road data, upon which the vehicle travels;
identifying (S202) a road (401) of a predetermined type in the road data;
acquiring a reference point (402) with respect to the identified road, the location of the reference point, relative to the identified road, being predetermined based upon the road type of the identified road;
correcting (S205) the current position of the vehicle by projecting the current map position of the vehicle, from the reference point to an intersection point with the identified road on the map, to obtain a corrected position (404) of the vehicle for display on the map.

8. A navigation program that causes a computer to execute the navigation method according to claim 7.

9. A computer-readable recording medium that stores therein the navigation program according to claim 8.

## Patentansprüche

1. Navigationseinrichtung für ein Fahrzeug, umfassend:
Eine Positionserkennungseinheit (103), die konfiguriert ist, eine aktuelle Position des Fahrzeugs zu erkennen;
eine Anzeigeeinheit (105), die konfiguriert ist, die Position des Fahrzeugs auf einer Karte anzuzeigen, welche Straßen, die Straßendaten repräsentieren, auf denen das Fahrzeug fährt, einschließt; und
eine Identifikationseinheit (101), die konfiguriert ist, eine Straße (401) eines vorgegebenen Typs in den Straßendaten zu identifizieren;
**gekennzeichnet durch** eine Erfassungseinheit (102), die konfiguriert ist, einen Referenzpunkt (402) in Bezug auf die identifizierte Straße zu erfassen, wobei die Lage des Referenzpunkts, relativ zur identifizierten Straße, basierend auf dem Straßentyp der identifizierten Straße, vorbestimmt ist; und
eine Korrektureinheit (104), die konfiguriert ist, die aktuelle Position des von der Positionserkennungseinheit erkannten Fahrzeugs **durch** Projizieren der aktuellen Kartenposition des Fahrzeugs, vom Referenzpunkt zu einem Schnittpunkt mit der identifizierten Straße auf der Karte zu berichtigen, um eine berichtigte Position (404) des Fahrzeugs zur Anzeige auf der Karte der Anzeigeeinheit zu erhalten.

2. Navigationseinrichtung nach Anspruch 1, wobei die Identifikationseinheit (101) konfiguriert ist, zu ermitteln, ob eine Straße eines runden Kreuzungstyps, die eine freie Fahrspurbreite aufweist und die um einen zentralen Punkt herum als eine Achse verläuft, vor dem Fahrzeug vorhanden ist, und konfiguriert ist, wenn ermittelt ist, dass die runde Kreuzung vorhanden ist, die runde Kreuzung als die identifizierte Straße (401) zu identifizieren.

3. Navigationseinrichtung nach Anspruch 2, wobei die Identifikationseinheit (101) konfiguriert ist, eine Kontur einer Straße vor dem Fahrzeug zu analysieren und konfiguriert ist, zu ermitteln, dass der runde Kreuzungstyp von Straße vorhanden sein wird, wenn die Straße vor dem Fahrzeug einer vorgegebenen Kontur ist.

4. Navigationseinrichtung nach Anspruch 3, wobei die Identifikationseinheit (101) konfiguriert ist, eine Suchposition für eine vorgegebene Distanz oder vorgegebene Zahl von Blöcken auf einer Straße, auf der ein Fahrzeug fahren kann, zu verschieben und zu ermitteln, dass der runde Kreuzungstyp von Straße vor dem Fahrzeug vorhanden ist, wenn die Suchposition in eine ursprüngliche Position innerhalb der vorgegebenen Distanz oder Zahl von Blöcken zurückkehrt.

5. Navigationseinrichtung nach Anspruch 1, wobei die Erfassungseinheit (102) konfiguriert ist, eine Kontur der identifizierten Straße (401) zu erfassen und einen Mittelpunkt einer geometrischen Figur zu erfassen, der durch die Kontur der identifizierten Straße als der Referenzpunkt (402) identifiziert wurde.

6. Navigationseinrichtung nach Anspruch 1, wobei die Erfassungseinheit (102) konfiguriert ist, den Referenzpunkt (402) in Bezug auf die identifizierte Straße (401) durch Lesen der Referenzpunktinformation zu erfassen, die Daten der identifizierten Straße betrifft.

7. Navigationsverfahren für ein Fahrzeug, umfassend:
Erkennen (S204) einer aktuellen Position des Fahrzeugs;
Anzeigen (S206) der Position des Fahrzeugs auf einer Karte, welche Straßendaten repräsentierende Straßen einschließt, auf denen das Fahrzeug fährt;
Identifizieren (S202) einer Straße (401) eines vorgegebenen Typs in den Straßendaten;
Erfassen eines Referenzpunkts (402) in Bezug auf die identifizierte Straße, wobei die Lage des Referenzpunkts, relativ zur identifizierten Straße, basierend auf dem Straßentyp der identifizierten Straße, vorbestimmt ist;
Berichtigen (S205) der aktuellen Position des Fahrzeugs durch Projizieren der aktuellen Kartenposition des Fahrzeugs, vom Referenzpunkt zu einem Schnittpunkt mit der identifizierten Straße auf der Karte, um eine berichtigte Position (404) des Fahrzeugs zur Anzeige auf der Karte zu erhalten.

8. Navigationsprogramm, das bewirkt, dass ein Computer das Navigationsverfahren nach Anspruch 7 ausführt.

9. Computerlesbares Aufzeichnungsmedium, welches das Navigationsprogramm nach Anspruch 8 darin speichert.

## Revendications

1. Dispositif de navigation pour un véhicule, comportant :
une unité de détection de position (103) configurée pour détecter une position actuelle du véhicule ;
une unité d'affichage (105) configurée pour afficher la position du véhicule sur une carte qui comprend des routes, représentant des données de routes, sur lesquelles le véhicule roule ; et
une unité d'identification (101) configurée pour identifier une route (401) d'un type prédéterminé dans les données de routes ;
**caractérisé par** une unité d'acquisition (102) configurée pour acquérir un point de référence (402) par rapport à la route identifiée, l'emplacement du point de référence, par rapport à la route identifiée, étant prédéterminé en fonction du type de route de la route identifiée ; et
une unité de correction (104) configurée pour corriger la position actuelle du véhicule détectée par l'unité de détection de position par la projection de la position actuelle du véhicule sur la carte, depuis le point de référence jusqu'à un point d'intersection avec la route identifiée sur la carte, pour obtenir une position corrigée (404) du véhicule à des fins d'affichage sur la carte de l'unité d'affichage.

2. Dispositif de navigation selon la revendication 1, dans lequel l'unité d'identification (101) est configurée pour déterminer si une route d'un type à intersection circulaire qui a une largeur de roulement libre et qui contourne un point central comme axe est présente devant le véhicule, et pour identifier, quand il est déterminé que l'intersection circulaire est présente, l'intersection circulaire comme étant la route identifiée (401).

3. Dispositif de navigation selon la revendication 2, dans lequel l'unité d'identification (101) est configurée pour analyser une forme d'une route se trouvant devant le véhicule, et pour déterminer le type de route à intersection circulaire comme étant présent quand la route devant le véhicule est d'une forme prédéterminée.

4. Dispositif de navigation selon la revendication 3, dans lequel l'unité d'identification (101) est configurée pour décaler une position de recherche pour une distance prédéterminée ou un nombre prédéterminé de blocs sur une route sur laquelle le véhicule peut rouler, et pour déterminer que le type de route à intersection circulaire est présent devant le véhicule quand la position de recherche retourne sur une position d'origine dans les limites de la distance prédéterminée ou du nombre prédéterminé de blocs.

5. Dispositif de navigation selon la revendication 1, dans lequel l'unité d'acquisition (102) est configurée pour acquérir une forme de la route identifiée (401), et pour acquérir un centre d'une figure géométrique identifiée par la forme de la route identifiée comme point de référence (402).

6. Dispositif de navigation selon la revendication 1, dans lequel l'unité d'acquisition (102) est configurée pour acquérir le point de référence (402) par rapport à la route identifiée (401) par la lecture des informations de point de référence concernant des données de la route identifiée.

7. Procédé de navigation pour un véhicule, comportant :
l'étape consistant à détecter (S204) une position actuelle du véhicule ;
l'étape consistant à afficher (S206) la position du véhicule sur une carte qui comprend des routes, représentant des données de routes, sur lesquelles le véhicule roule ;
l'étape consistant à identifier (S202) une route (401) d'un type prédéterminé dans les données de routes ;
l'étape consistant à acquérir un point de référence (402) par rapport à la route identifiée, l'emplacement du point de référence, par rapport à la route identifiée, étant prédéterminé en fonction du type de route de la route identifiée ;
l'étape consistant à corriger (S205) la position actuelle du véhicule par la projection de la position actuelle du véhicule sur la carte, depuis le point de référence jusqu'à un point d'intersection avec la route identifiée sur la carte, pour obtenir une position corrigée (404) du véhicule à des fins d'affichage sur la carte.

8. Programme de navigation qui amène un ordinateur à exécuter le procédé de navigation selon la revendication 7.

9. Support d'enregistrement lisible par ordinateur qui enregistre dans celui-ci le programme de navigation selon la revendication 8.
